# EUROPÄISCHE PATENTSCHRIFT

(11) **EP 1 633 587 B1**
(45) Veröffentlichungstag und Bekanntmachung des Hinweises auf die Patenterteilung: **20.09.2006**
(21) Anmeldenummer: 04738560.4
(22) Anmeldetag: 26.05.2004
(51) Int. Cl.: B60J 7/10

(54) **VERDECK FÜR EIN KRAFTFAHRZEUG**
FOLDING TOP FOR A MOTOR VEHICLE
CAPOTE POUR AUTOMOBILE

(30) Priorität: 03.06.2003 DE 10324920
(43) Veröffentlichungstag der Anmeldung: 15.03.2006
(73) Patentinhaber: Wilhelm Karmann GmbH, 49084 Osnabrück (DE)
(72) Erfinder: BUNSMANN, Winfried, 49143 Bissendorf (DE); THEUERKAUF, Jürgen, 49565 Bramsche (DE)
(86) Internationale Anmeldenummer: PCT/DE2004/001091
(87) Internationale Veröffentlichungsnummer: WO 2004/108456

(56) Entgegenhaltungen:
- US-A- 3 348 877
- PATENT ABSTRACTS OF JAPAN Bd. 1996, Nr. 01, 31. Januar 1996 (1996-01-31) -& JP 07 246839 A (SUZUKI MOTOR CORP), 26. September 1995 (1995-09-26)
- PATENT ABSTRACTS OF JAPAN Bd. 009, Nr. 202 (M-405), 20. August 1985 (1985-08-20) -& JP 60 064027 A (AISHIN SEIKI KK), 12. April 1985 (1985-04-12)

## Beschreibung

Die Erfindung betrifft ein Verdeck für ein Kraftfahrzeug, mit wenigstens einem ersten und einem zweiten von einer flexiblen Dachhaut überzogenen flächigen Strukturelement, welche Strukturelemente zum Aufsetzen und Abbau über einer Dachöffnung in Fahrzeugquerrichtung ausgelegt sind und in aufgesetztem Zustand frontseitig an einem Windschutzscheibenrahmen und heckseitig an einem die Fahrzeugbreite überspannenden Bügel festgelegt sind.

Verdecke für Kraftfahrzeuge mit einer Dachöffnung zwischen einem Windschutzscheibenrahmen und einem als Überrollbügel ausgebildeten heckseitigen Bügel, welche auch als Targa-Fahrzeuge bezeichnet werden, sind als zusammenfaltbare Dächer mit einer Spriegel-Konstruktion oder als starre, plattenartige Dachabdeckungen bekannt.

Bei Verwendung von Spriegeln, welche von einer flexiblen Dachhaut überzogen sind, ist es häufig erforderlich, dass zur Aufspannung des Verdecks über eine Dachöffnung zunächst Quer- oder Längsspriegel über die Dachöffnung gespannt werden müssen, bevor über diese Spriegel die flexible Dachhaut gezogen und an seitlichen Fahrzeugelementen befestigt werden kann. Ein solcher Aufbau und Abbau eines Verdeckes erfordert jedoch viele Arbeitsschritte und birgt aufgrund der Teilevielzahl zudem die Gefahr, dass beim Auf- oder Abbau ein Element des Daches vergessen wird, oder im Lauf der Zeit verloren geht.

In der DE 1 580 535 B wird ein im wesentlichen eine Einheit bildendes Verdeck beschrieben, welches an einem Windschutzscheibenrahmen und an einem den Fahrgastraum überspannenden Überrollbügel lösbar befestigt ist, wobei die Befestigung an dem Rahmen der Windschutzscheibe unnachgiebig und die Befestigung an dem Überrollbügel elastisch ausgeführt ist. Das Verdeck wird hier durch seitliche Holme und die Holme verbindende Versteifungen, welche im Einbauzustand den Fahrgastraum in Fahrzeugquerrichtung überspannen, sowie ein darüber gespanntes flexibles Verdeckmaterial gebildet.

Nachteilig ist bei dieser Lösung, daß die Entfaltung des Daches in Fahrzeuglängsrichtung über die Dachöffnung und die Verbindung des Verdecks mit dem Windschutzscheibenrahmen bzw. dem Überrollbügel, an denen das Verdeck im aufgesetzten Zustand jeweils mit einer vorderen Querverstrebung bzw. einer hinteren Querverstrebung über Steck- und Zapfenverbindungen befestigt ist, sehr aufwendig ist.

Weiterhin hat dieses bekannte Verdeck den Nachteil, daß es im demontierten Zustand zwar bezüglich seiner Längsrichtung teilweise z-artig gefaltet werden kann, jedoch ist die Zusammenlegbarkeit begrenzt, und das Verdeck nimmt auch im zusammengefalteten Zustand einen vergleichsweise großen Stauraum ein.

Die US 3,348,877 beschreibt ein abnehmbares Dach mit einer flexiblen Dachhaut, wobei sich die Dachhaut bis auf die Fahrzeugbrüstung erstreckt und somit gleichzeitig Seitenfenster ausbildet. In einem fahrzeugmittigen Bereich sind elastische, spriegelartige Elemente in Aufnahmen an einem Windschutzscheibenrahmen und an einem hinteren Targa-Bügel angeordnet, über die der flexible Verdeckstoff in gespanntem Zustand verläuft und mittig gehalten wird. Zum Ablegen wird das Verdeck ausgehend von jeder Fahrzeugseite zur Mitte hin jeweils z-artig zusammengefaltet und als Paket abgenommen.

Ein solches Verdeck hat jedoch den Nachteil, daß es eine sehr geringe Stabilität aufweist, wobei insbesondere zu den Fahrzeugseiten hin ein sogenannter Ballon-Effekt zu erwarten ist. Des weiteren erweist sich bei dieser bekannten Lösung die Kinematik zum Montieren oder Demontieren an der Dachöffnung als schwierig handhabbar.

Die Dachöffnung überspannende Platten bereiten häufig aufgrund ihrer Größe Probleme, da sie in der Regel unhandliche Einheiten bilden, welche insbesondere für kleinere Bedienpersonen nur schwierig handhabbar sind und zudem einen großen Stauraum erfordern.

Die US 5,080,428 offenbart ein Verdeck für ein Targa-Kraftfahrzeug mit zwei zusammenklappbaren Plattenelementen, welche zum Ablegen des Verdecks über ein Scharnier um 180° zueinander verschwenkt werden und somit eine leichter verstaubare Einheit bilden. Diese bekannte Lösung ist jedoch dahin gehend nachteilig, dass sie nur für Dächer mit geringer Wölbung anwendbar ist, wobei die Packhöhe auch bei vergleichsweise gering gewölbten Dachelementen hoch ist, da die Dachelemente mit entgegengesetzter Wölbung aufeinander abgelegt werden.

Es ist daher Aufgabe der vorliegenden Erfindung, ein Verdeck für ein Kraftfahrzeug zu schaffen, welches eine möglichst einfach handhabbare Einheit bildet, gestalterisch einen großen Freiraum bei der Gestaltung der Dachöffnung lässt und im abgelegten Zustand nur einen geringen Stauraum beansprucht.

Erfindungsgemäß wird diese Aufgabe mit einem Verdeck für ein Kraftfahrzeug gelöst, welches mindestens ein erstes und ein zweites von einer flexiblen Dachhaut überzogenes flächiges Strukturelement aufweist, welche Strukturelemente zum Aufsetzen und Abbau über einer Dachöffnung in Fahrzeugquerrichtung ausgelegt sind und in aufgesetztem Zustand frontseitig an einem Windschutzscheibenrahmen und heckseitig an einem die Fahrzeugbreite überspannenden Bügel festgelegt sind, wobei die flächigen Strukturelemente über Führungseinrichtungen miteinander verbunden und mittels dieser Führungseinrichtungen in Fahrzeugquerrichtung zueinander verschiebbar sind.

Der Begriff Windschutzscheibenrahmen ist dabei vorliegend in seinem weitesten Sinne zu verstehen, da die flächigen Strukturelemente beispielsweise auch an einem Dachelement anliegen können, welches an ein die Windschutzscheibe einfassendes Rahmenteil angrenzt.

Ein erfindungsgemäß ausgestaltetes, manuell zu bedienendes Verdeck mit zueinander verschiebbaren flächigen Strukturelementen ist dahingehend vorteilhaft, dass es eine leicht handhabbare und aus wenigen Einzelteilen gebildete Einheit darstellt, wobei die plattenartigen Strukturelemente eine hohe Stabilität des Verdecks gewährleisten.

Das Verdeck gemäß der Erfindung hat des Weiteren den Vorteil, dass es unabhängig von der Stärke der Wölbung der flächigen Strukturelemente in Fahrzeugquerrichtung zu einem kompakten Paket zusammenschiebbar ist, welches mit geringem Stauraumbedarf gelagert werden kann.

Die flächigen Strukturelemente können gemäß einer ersten vorteilhaften Ausführung ineinander schiebbar oder gemäß einer weiteren vorteilhaften Ausführung übereinander schiebbar ausgebildet sein. In jedem Fall bilden die flächigen Strukturelemente mit der flexiblen Dachhaut eine leichte und mit wenigen Handgriffen auf- und abmontierbare Einheit.

Ein einfacher Mechanismus zur Verschiebung der flächigen Strukturelemente ineinander kann dadurch realisiert sein, dass das erste flächige Strukturelement mit wenigstens einer sich in Fahrzeugquerrichtung erstreckenden Aussparung ausgebildet ist, in die eine komplementär ausgeformte Rippe eines mit dem ersten flächigen Strukturelement verbundenen zweiten Strukturelements einführbar ist, wobei die mit den flächigen Strukturelementen verbundene flexible Dachhaut im zusammengeschobenen Zustand der flächigen Strukturelemente gefaltet ist und im auf die Dachöffnung montierten Zustand wenigstens eine Aussparung an dem ersten flächigen Strukturelement überspannt.

Eine solche Ausgestaltung zeichnet sich nicht nur durch einen äußerst geringen Stauraumbedarf aus, sondern zudem durch ein geringes Gewicht, da die kammartig ineinander greifenden flächigen Strukturelemente ein deutlich geringeres Gewicht aufweisen als vergleichbare starre Abdeckplatten.

Eine einfache Lösung, die flächigen Strukturelemente übereinander schiebbar auszubilden, besteht darin, die Führungseinrichtungen mit zwei Führungsschienen auszubilden, welche schlitzartig an dem ersten flächigen Strukturelement ausgebildet sind, sowie Rollkörper oder Gleitkörper vorzusehen, welche die schlitzartigen Führungsschienen durchgreifend mit einem unter oder über das erste flächige Strukturelement schiebbaren zweiten flächigen Strukturelement verbunden sind.

Gemäß einer bevorzugten Ausgestaltung des erfindungsgemäßen Verdecks weist dieses zwei flächige Strukturelemente auf, jedoch können in hiervon abweichenden Ausgestaltungen auch mehrere flächige Strukturelemente vorgesehen sein, welche über Führungseinrichtungen miteinander verbunden und in Fahrzeugquerrichtung zueinander verschiebbar sind.

Weitere Vorteile und vorteilhafte Ausgestaltungen eines Verdecks gemäß der Erfindung sind der Beschreibung, der Zeichnung und den Patentansprüchen entnehmbar.

Drei Ausführungsbeispiele eines Verdecks nach der Erfindung sind in der Zeichnung schematisch vereinfacht dargestellt und werden in der nachfolgenden Beschreibung näher erläutert.
Es zeigt:
- Fig. 1: eine ausschnittsweise dreidimensionale Ansicht eines Kraftfahrzeuges mit einer Dachöffnung in Targa-Bauweise und eine erste Ausführung eines Verdecks gemäß der Erfindung;
- Fig. 2: die Dachöffnung gemäß Fig. 1 mit einer zweiten Ausführung eines erfindungsgemäßen Verdecks mit flächigen Strukturteilen, welche ineinander geschoben sind;
- Fig. 3: das Verdeck gemäß Fig. 2 in einem weiter über die Dachöffnung gezogenen Montagezustand;
- Fig. 4: das Verdeck gemäß Fig. 2 und Fig. 3 in einem die Dachöffnung nahezu vollständig überdeckenden Montagezustand;
- Fig. 5: einen vereinfachten Querschnitt durch das Verdeck gemäß Fig. 2 entlang der Linie V-V in Fig. 3;
- Fig. 6: eine Detaildarstellung des Verdecks gemäß Fig. 2 bis Fig. 4 entlang der Linie VI-VI in Fig. 4; und
- Fig. 7: eine dritte Ausführung eines erfindungsgemäß ausgestalteten Verdecks in einem teilweise die Dachöffnung überdeckenden Zustand.

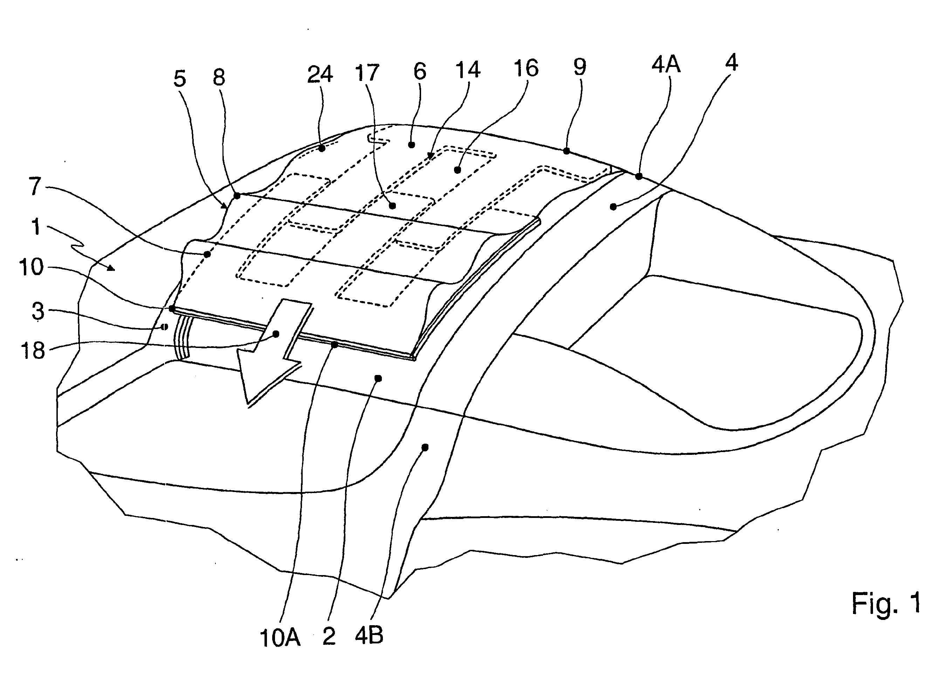

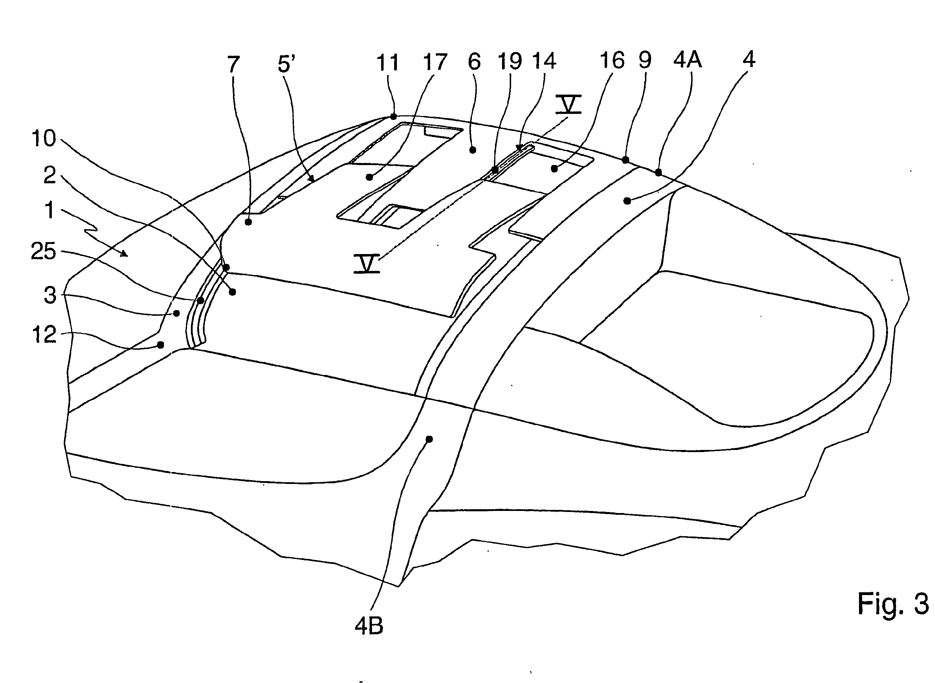

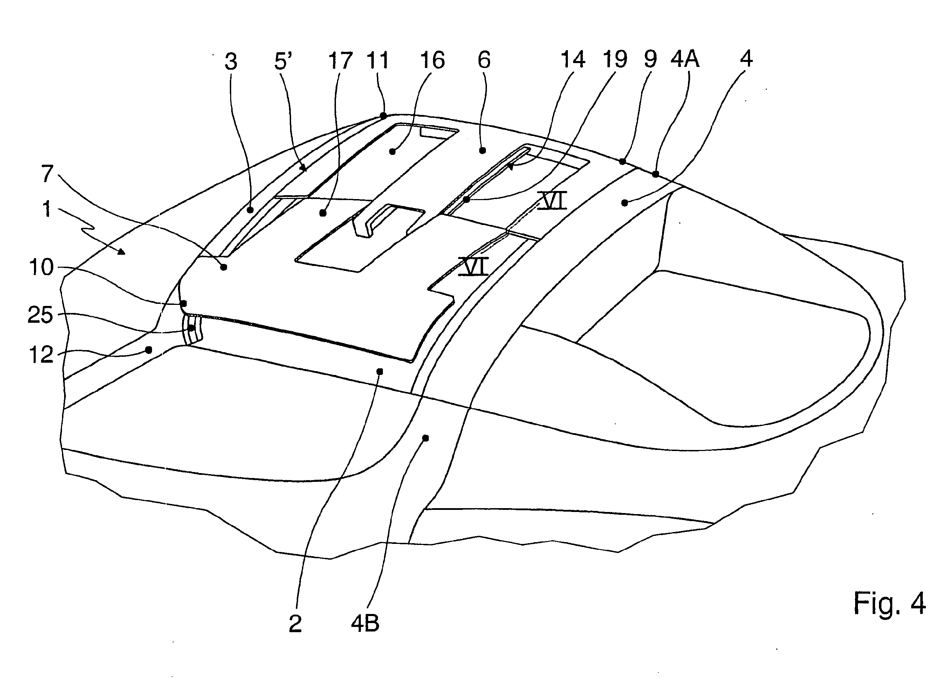

In den Fig. 1 bis 4 und Fig. 7 ist jeweils aus einer seitlichen Perspektive ausschnittsweise ein Kraftfahrzeug 1 dargestellt, welches als ein Targa-Fahrzeug mit einer Dachöffnung 2 zwischen einem Windschutzscheibenrahmen 3 und einem hier als Überrollbügel dienenden, heckseitigen und eine Fahrgastzelle über die Fahrzeugbreite überspannenden Bügel 4 aufgebaut ist.

Zur Abdeckung der Dachöffnung 2 ist jeweils ein zwischen dem Windschutzscheibenrahmen 3 und dem Überrollbügel 4 einbaubares Verdeck 5, 5', 5" vorgesehen, welches jeweils eine vormontierte Einheit aus einem ersten flächigen Strukturelement 6, einem hiermit verbundenen zweiten flächigen Strukturelement 7 und einer diese in einem auf die Dachöffnung 2 montierten Zustand überspannenden flexiblen Dachhaut 8 darstellt.

Die beiden jeweils das Verdeck 5, 5', 5" in Fahrzeugquerrichtung im auf die Dachöffnung 2 aufgesetzten Zustand begrenzenden flächigen Strukturelemente 6, 7 weisen jeweils einen Seitenholm 9 bzw. 10 auf, über den die flächigen Strukturelemente 6 bzw. 7 mit Fahrzeugseitenelementen verbindbar sind, wobei vorliegend das erste flächige Strukturelement 6 zur Verbindung mit Fahrzeugseitenelementen auf einer Beifahrerseite des Kraftfahrzeuges 1 und das zweite flächige Strukturelement 7 zur Verbindung mit Fahrzeugseitenelementen an der Fahrerseite des Kraftfahrzeuges 1 ausgelegt sind.

Zur Verbindung mit beifahrerseitigen Fahrzeugseitenelementen, welche vorliegend zweckmäßigerweise frontseitig der Windschutzscheibenrahmen 3 im Bereich einer beifahrerseitigen A-Säule 11 und heckseitig ein seitlicher Schenkel 4A des Überrollbügels 4 darstellen, dient eine konstruktiv einfache Nase-Nut-Steckverbindung, wobei an den Stirnflächen des dem ersten flächigen Strukturelement 6 zugeordneten Seitenholms 9 eine Nase und an der A-Säule 11 sowie dem entsprechenden Schenkel 4A des Überrollbügels 4 eine gekrümmte Nut vorgesehen sein kann, in welche die jeweilig eingeführte Nase bei einer Spannung des Verdecks 5, 5', 5" in Fahrzeugquerrichtung eingreift.

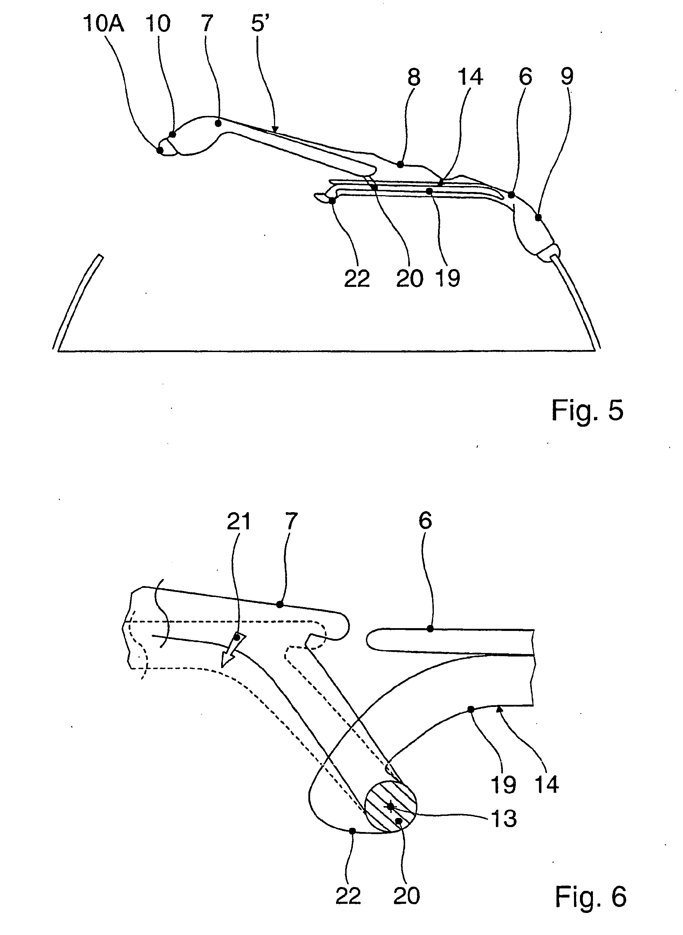

Der zweite, fahrerseitige Seitenholm 10 an dem zweiten flächigen Strukturelement 7 ist, wie beispielsweise den Fig. 5 und Fig. 6 zu entnehmen ist, an seiner Verbindungsstelle mit den zugeordneten fahrerseitigen Fahrzeugseitenelementen, welche hier eine fahrerseitige A-Säule 12 und ein fahrerseitiger Schenkel 4B des Überrollbügels 4 darstellen, um eine Schwenkachse 13 drehbar gelagert. Wenn die vormontierte Einheit des Verdecks 5, 5', 5" nach einem Befestigen des ersten flächigen Strukturelements 6 mittels des Seitenholms 9 auf der Beifahrerseite über die Dachöffnung 2 ausgebreitet wird, wird das zweite flächige Strukturelement 7 mit seinem zweiten Holm 10 um die Schwenkachse 13 im Einbauzustand manuell derart nach unten verschwenkt, dass der fahrerseitige Seitenholm 10 mit den zugeordneten Fahrzeugseitenelementen beispielsweise auf einfache Art und Weise mittels eines federbelasteten Dorns und einer entsprechenden Ausnehmung eine Rastverbindung ausbildet.

Die zum Aufsetzen und Abbau über der Dachöffnung 2 in Fahrzeugquerrichtung ausgelegten flächigen Strukturelemente 6, 7 sind jeweils über Führungseinrichtungen 14 bzw. 15 miteinander verbunden und mittels dieser Führungseinrichtungen in Fahrzeugquerrichtung zueinander verschiebbar.

Bei der Ausführung gemäß Fig. 1 bis Fig. 6 sind die flächigen Strukturelemente 6, 7 jeweils ineinander verschiebbar, wobei die Ineinander-Verschiebbarkeit der flächigen Strukturelemente 6, 7 jeweils dadurch realisiert ist, dass das erste flächige Strukturelement 6 auf der Beifahrerseite mit sich in Fahrzeugquerrichtung erstreckenden Aussparungen 16 ausgebildet ist, in die komplementär ausgeformte Rippen 17 des mit dem ersten flächigen Strukturelements 6 verbundenen zweiten flächigen Strukturelements 7 einführbar sind.

Bei der Ausführung nach Fig. 1 sind an dem zweiten flächigen Strukturelement 7 jeweils drei Rippen 17 vorgesehen, welche kammartig in drei Aussparungen 16 des ersten flächigen Strukturelements 6 einführbar sind, von denen eine mittlere Aussparung U-förmig und zwei seitliche Aussparungen L-förmig ausgebildet sind.

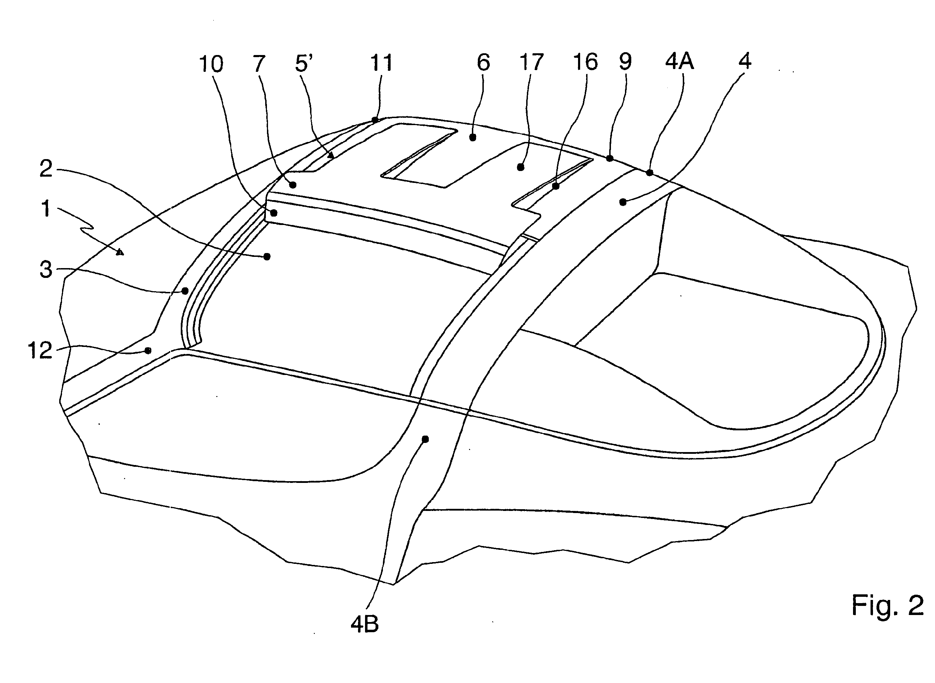

Bei dem Ausführungsbeispiel nach Fig. 2 bis Fig. 6 ist das erste flächige Strukturelement 6 mit zwei Aussparungen 16 und das zweite flächige Strukturelement 7 mit zwei Rippen 17 ausgebildet, wobei die Aussparungen 16 und die Rippen 17 wiederum kammartig ineinander greifen. Durch die kammartige Ausführung der flächigen Strukturelemente 6, 7 können diese bei einem Abbau von der Dachöffnung 2 weit ineinandergreifend zusammengeschoben werden, so dass sie ein kompaktes Paket bilden, welches im abgenommenen Zustand einen nur geringen Stauraum beansprucht.

Die flexible Dachhaut 8, welche aus Gründen der Übersichtlichkeit in den Fig. 1 bis Fig. 7 nur vereinzelt dargestellt ist, ist jeweils im Einbauzustand an einem an Fahrzeugseitenelemente grenzenden Randbereich des ersten und zweiten flächigen Strukturelements 6 bzw. 7 befestigt, wobei die Befestigung der Dachhaut 8 bei den gezeigten Ausführungen jeweils über übliche Verschlussmittel an den Seitenholmen 9 und 10 vorgesehen ist. Bei einem Ausbreiten des Verdecks 5 bzw. 5' über der Dachöffnung 2 in der in Fig. 1 mit einem Pfeil 18 angedeuteten Fahrzeugquerrichtung überdeckt die flexible Dachhaut 8 die sich zwischen den Aussparungen 16 und Rippen 17 ergebenden Freiräume und wird dabei gespannt.

Die Führungseinrichtungen 14, welche bei den Ausführungen gemäß Fig. 1 bis Fig. 6 die flächigen Strukturelemente 6 und 7 miteinander verbinden und deren Verschiebbarkeit zueinander ermöglichen, werden vorliegend durch Führungsschienen 19 und darin in Fahrzeugquerrichtung bewegliche Gleitkörper bzw. Kulissensteine 20 gebildet, wobei jeweils an einem sich in Fahrzeugquerrichtung erstreckenden seitlichen Rand der Aussparungen 16 und Rippen 17 eine Führungsschiene 19 und ein darin geführter Kulissenstein 20 angeordnet ist. Die Führungsschienen 19 können - wie gezeigt - an dem beifahrerseitigen ersten flächigen Strukturelement 6 und die Kulissensteine 20 an dem zweiten flächigen Strukturelement 7 angebracht sein, jedoch kann in einer hiervon abweichenden Ausführung selbstverständlich auch eine umgekehrte Anordnung vorgesehen sein.

Anstelle der hier gewählten, als Kulissensteine ausgebildeten Gleitkörper 20 können in weiteren Ausführungen auch Rollkörper oder Wälzkörper zur Führung in den Führungsschienen vorgesehen sein.

Zur Ausbildung der Schwenkachse 13, über die das zweite flächige Strukturelement 7 in einer in Fig. 6 mit einem Pfeil 21 angedeuteten Schwenkbewegung unter Spannung der flexiblen Dachhaut 8 in seine Befestigungsposition an der Fahrerseite verschwenkt wird, ist vorliegend ein in Fig. 5 und Fig. 6 dargestelltes Widerlager 22 vorgesehen, welches als ein Endabschnitt der Führungsschiene 19 mit einem wenigstens annähernd L- bzw. C-förmigen Querschnitt ausgebildet ist, in das das zweite flächige Strukturelement 7 mit dem Gleitkörper bzw. Kulissenstein 20 - wie in Fig. 6 vereinfacht gezeigt - bei entsprechender Bewegung in Fahrzeugquerrichtung verfährt und dort bei der mit dem Pfeil 21 gezeigten Schwenkbewegung in die mit gestrichelter Linie dargestellte Schließposition des Verdecks 5 bzw. 5' verbleibt.

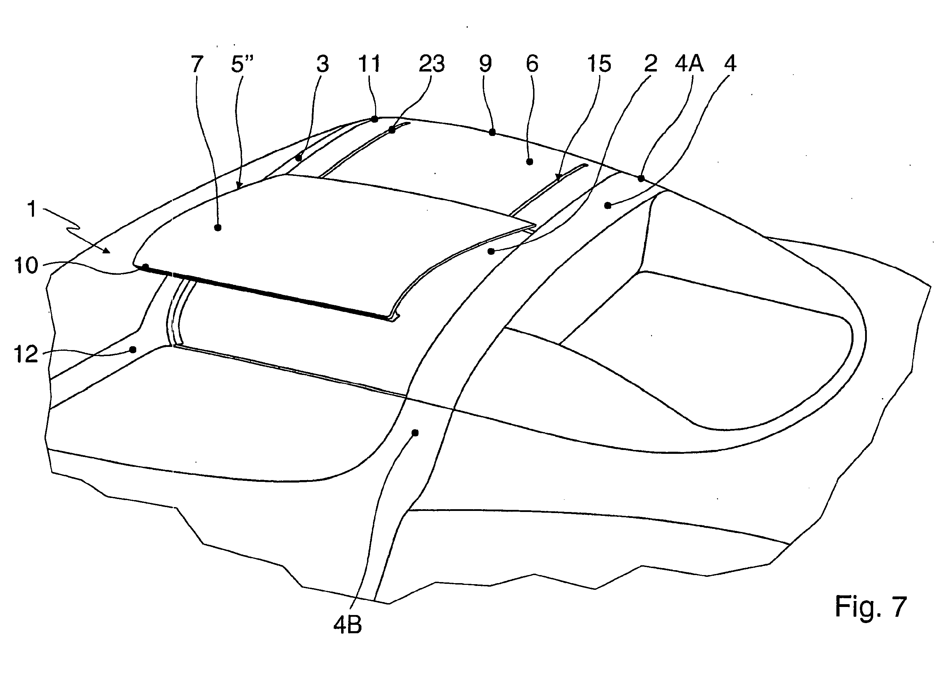

Bei der Ausführung nach Fig. 7 sind die flächigen Strukturelemente 6, 7 übereinander schiebbar ausgebildet, wobei vorliegend das fahrerseitige zweite flächige Strukturelement 7 zum Abnehmen des Verdecks über das beifahrerseitige erste flächige Strukturelement 6 geschoben wird. Zur Realisierung der Verschiebekinematik sind die Führungseinrichtungen 15, welche die flächigen Strukturelemente 6, 7 miteinander verbinden, vorliegend mit zwei schlitzartig an dem ersten flächigen Strukturelement 6 ausgeformten Führungsschienen 23 ausgebildet, welche von den mit dem zweiten flächigen Strukturelement 7 verbundenen Rollkörpern oder hier gewählten Gleitkörpern 20 durchgriffen werden. An dem fahrzeugmittigen Ende der schlitzartigen Führungsschienen 15 sind vorzugsweise wie bei den Ausführungen nach Fig. 1 bis Fig. 6 Widerlager angeordnet, welche eine Schwenkachse zur Verschwenkung des zweiten flächigen Strukturelements 7 in oder aus seiner Rastposition an den beifahrerseitigen Fahrzeugseitenelementen bilden. Das Widerlager kann bei der Ausführung gemäß Fig. 7 ein separates Bauelement darstellen.

Die Verrastung der hier aus Gründen der Übersichtlichkeit wiederum ohne die flexible Dachhaut dargestellten flächigen Strukturelemente 6, 7 an den fahrerseitigen und beifahrerseitigen Fahrzeugseitenelementen erfolgt bei der Ausführungsvariante gemäß Fig. 7 wie bei den Ausführungsformen nach Fig. 1 bis Fig. 6.

Bei allen gezeigten Ausführungen steht es dem Fachmann frei, je nach Fahrzeugtyp und des sich aus der Dachgeometrie ergebenden Strömungsverhaltens gegebenenfalls weitere Verrastungen oder Verriegelungseinrichtungen vorzusehen, mittels denen ein sogenanntes Ballooning bei schneller Fahrt vermieden wird.

Die flächigen Strukturelemente 6, 7 sind bei den gezeigten Ausführungsbeispielen jeweils in Blechbauweise aus einem leichten Metallwerkstoff ausgeführt, jedoch können die flächigen Strukturelemente in hiervon abweichenden Ausführungen selbstverständlich auch aus einem Kunststoff oder einem glasfaserverstärkten Kunststoff ausgeführt sein.

Die flexible Dachhaut 8 ist in an sich bekannter Weise aus textilem Material gefertigt, jedoch kann sie in einer einfachen Ausführung auch aus folienartigem Kunststoff gefertigt sein.

Zur Dichtung des Verdecks 5, 5', 5" weist die flexible Dachhaut 8 im Bereich des dem Windschutzscheibenrahmen 3 zugewandten Randes der flächigen Strukturelemente 6 und 7 sowie an deren dem Überrollbügel 4 zugewandten Rand jeweils ein in Fig. 1 strichliert angedeutetes Spannseil 24 auf, welches mit einer an den flächigen Strukturelementen 6 und 7 angeordneten Dichteinrichtung, welche in einfachster Weise ein Dichtband darstellt, im montierten Zustand dichtend zusammenwirkt. Die flächigen Strukturelemente selbst weisen fahrzeugfrontseitig und fahrzeugheckseitig jeweils ein Dichtprofil 25 und an den Seitenholmen 9 bzw. 10 eine Seitenholmdichtung 10A auf.

In abweichenden Ausführungen kann sich die textile Dachhaut auch frontseitig und/oder heckseitig über die flächigen Strukturelemente 6, 7 hinaus erstrecken und beispielsweise über ein Spannseil dichtend mit einer Dichteinrichtung an dem Windschutzscheibenrahmen und dem Überrollbügel zusammenwirken.

### Bezugszeichen

- 1: Kraftfahrzeug
- 2: Dachöffnung
- 3: Windschutzscheibenrahmen
- 4: Bügel, Überrollbügel
- 4A: seitlicher Bügelschenkel
- 4B: seitlicher Bügelschenkel
- 5, 5', 5": Verdeck
- 6: erstes flächiges Strukturelement
- 7: zweites flächiges Strukturelement
- 8: Dachhaut
- 9: Seitenholm
- 10: Seitenholm
- 10A: Seitenholmdichtung
- 11: A-Säule
- 12: A-Säule
- 13: Schwenkachse
- 14: Führungseinrichtung
- 15: Führungseinrichtung
- 16: Aussparung
- 17: Rippe
- 18: Pfeil Montagerichtung
- 19: Führungsschiene
- 20: Gleitkörper, Kulissenstein
- 21: Pfeil Schwenkrichtung
- 22: Widerlager
- 23: Führungsschienen
- 24: Spannseil
- 25: Dichtprofil

## Patentansprüche

1. Verdeck für ein Kraftfahrzeug (1), mit wenigstens einem ersten und einem zweiten von einer flexiblen Dachhaut (8) überzogenen flächigen Strukturelement (6, 7), welche Strukturelemente (6, 7) zum Aufsetzen und Abbau über einer Dachöffnung (2) in Fahrzeugquerrichtung ausgelegt sind und in aufgesetztem Zustand frontseitig an einem Windschutzscheibenrahmen (3) und heckseitig an einem die Fahrzeugbreite überspannenden Bügel (4) festgelegt sind,
**dadurch gekennzeichnet,**
**dass** die flächigen Strukturelemente (6, 7) über Führungseinrichtungen (14, 15) miteinander verbunden und mittels dieser Führungseinrichtungen (14, 15) in Fahrzeugquerrichtung zueinander verschiebbar sind.

2. Verdeck nach Anspruch 1,
**dadurch gekennzeichnet,**
**dass** die flächigen Strukturelemente (6, 7) ineinander schiebbar ausgebildet sind.

3. Verdeck nach Anspruch 2,
**dadurch gekennzeichnet,**
**dass** das erste flächige Strukturelement (6) mit wenigstens einer sich in Fahrzeugquerrichtung erstreckenden Aussparung (16) ausgebildet ist, in die eine komplementär ausgeformte Rippe (17) eines mit dem ersten flächigen Strukturelement (6) verbundenen zweiten flächigen Strukturelements (7) einführbar ist.

4. Verdeck nach einem der Ansprüche 1 bis 3,
**dadurch gekennzeichnet,**
**dass** die Führungseinrichtungen (14) durch Führungsschienen (19) und darin in Fahrzeugquerrichtung bewegliche Rollkörper oder Gleitkörper (20) an seitlichen Rändern der wenigstens einen Rippe (17) und Aussparung (16) gebildet sind.

5. Verdeck nach Anspruch 4,
**dadurch gekennzeichnet,**
**dass** die Führungsschienen (19) an dem ersten flächigen Strukturelement (6) und der Rollkörper oder Gleitkörper (20) an dem zweiten flächigen Strukturelement (7) angeordnet sind.

6. Verdeck nach Anspruch 1,
**dadurch gekennzeichnet,**
**dass** die flächigen Strukturelemente (6, 7) übereinander schiebbar ausgebildet sind.

7. Verdeck nach Anspruch 6,
**dadurch gekennzeichnet,**
**dass** die Führungseinrichtungen (15) durch wenigstens zwei Führungsschienen (23), welche schlitzartig an dem ersten flächigen Strukturelement (6) ausgebildet sind, und Rollkörper oder Gleitkörper, welche die schlitzartigen Führungsschienen (23) durchgreifend mit einem unter oder über das erste flächige Strukturelement (6) schiebbaren zweiten flächigen Strukturelement (7) verbunden sind, gebildet sind.

8. Verdeck nach einem der Ansprüche 1 bis 7,
**dadurch gekennzeichnet,**
**dass** das erste und das zweite flächige Strukturelement (6, 7) jeweils einen mit wenigstens einem Fahrzeugseitenelement (11, 12, 4A, 4B) verbindbaren Seitenholm (9, 10) aufweisen.

9. Verdeck nach einem der Ansprüche 1 bis 8,
**dadurch gekennzeichnet,**
**dass** die flächigen Strukturelemente (6, 7) über die Dachöffnung (2) ausbreitbar sind, indem das erste flächige Strukturelement (6) mit seinem Seitenholm (9) an den ihm zugeordneten Fahrzeugseitenelementen (11, 4A) befestigt wird und das wenigstens zweite flächige Strukturelement (7) mit seinem Seitenholm (10) in Fahrzeugquerrichtung über die Dachöffnung (2) bis zu einer Verbindungsstelle mit diesem zugeordneten Fahrzeugseitenelementen (12, 4B) geführt wird.

10. Verdeck nach Anspruch 8 oder 9,
**dadurch gekennzeichnet,**
**dass** der Seitenholm (9) des ersten flächigen Strukturelements (6) an den zugeordneten Fahrzeugseitenelementen (11, 4A) mittels einer Nase-Nut-Steckverbindung befestigbar ist.

11. Verdeck nach einem der Ansprüche 8 bis 10,
**dadurch gekennzeichnet,**
**dass** der Seitenholm (10) des zweiten flächigen Strukturelements (7) zur Spannung der Dachhaut (8) um eine Schwenkachse (13) drehbar gelagert ist und mit den zugeordneten Fahrzeugseitenelementen (12, 4B) über eine Rastverbindung verbindbar ist.

12. Verdeck nach Anspruch 11,
**dadurch gekennzeichnet,**
**dass** die Schwenkachse (13) durch die in ein Widerlager (22) an den Führungsschienen (19, 23) geführten Rollkörper oder Gleitkörper (20) der Führungseinrichtungen (14, 15) gebildet wird.

13. Verdeck nach einem der Ansprüche 8 bis 12,
**dadurch gekennzeichnet,**
**dass** ein mit dem Seitenholm (9, 10) frontseitig verbindbares Fahrzeugseitenelement durch den Windschutzscheibenrahmen (3) im Bereich einer A-Säule (11, 12) und ein mit dem Seitenholm (9, 10) heckseitig verbindbares Fahrzeugseitenelement durch den heckseitigen Bügel (4, 4A, 4B) gebildet wird.

14. Verdeck nach einem der Ansprüche 1 bis 13,
**dadurch gekennzeichnet,**
**dass** die flexible Dachhaut (8) jeweils an einem im Einbauzustand an Fahrzeugseitenelemente (11, 12, 4A, 4B) grenzenden Randbereich des ersten und zweiten flächigen Strukturelements (6, 7) befestigt ist.

15. Verdeck nach einem der Ansprüche 1 bis 14,
**dadurch gekennzeichnet,**
**dass** die flexible Dachhaut (8) im Bereich der Auflage an den flächigen Strukturelementen (6, 7) und/oder an dem Windschutzscheibenrahmen (3) und/oder an dem heckseitigen Bügel (4) ein Spannseil (24) aufweist, welches mit einer an den flächigen Strukturelementen (6, 7), an dem Windschutzscheibenrahmen (3) und/oder an dem heckseitigen Bügel (4) angeordneten Dichteinrichtung im montierten Zustand dichtend zusammenwirkt.

## Claims

1. A soft-top for a motor vehicle (1), with at least a first and a second planar structural element (6, 7) which are covered by a flexible roof skin (8) and which are designed to be placed on and removed over a roof opening (2) in the vehicle transverse direction and, in the placed-on state, are fixed at the front to a windscreen frame (3) and at the rear to a bow (4) which spans the width of the vehicle,
**characterised in that**
the planar structural elements (6, 7) are connected to each other by means of guide devices (14, 15) and can be moved towards each other in the vehicle transverse direction using these guide devices (14, 15).

2. The soft-top according to Claim 1,
**characterised in that**
the planar structural elements (6, 7) are formed so as to be able to be pushed into each other.

3. The soft-top according to Claim 2,
**characterised in that**
the first planar structural element (6) is formed with at least one recess (16) which extends in the vehicle transverse direction and into which a complementarily shaped rib (17) of a second planar structural element (7), which is connected to the first planar structure (6), is able to be inserted.

4. The soft-top according to one of Claims 1 to 3,
**characterised in that**
the guide devices (14) are configured by guide rails (19) and roller bodies or sliding bodies (20), which are movable therein in the vehicle transverse direction, at lateral edges of the at least one rib (17) and recess (16).

5. The soft-top according to Claim 4,
**characterised in that**
the guide rails (19) are arranged at the first planar structural element (6) and the roller body or sliding body (20) are arranged at the second planar structural element (7).

6. The soft-top according to Claim 1,
**characterised in that**
the planar structural elements (6, 7) are formed so as to be able to be pushed over each other.

7. The soft-top according to Claim 6,
**characterised in that**
the guide devices (15) are formed by at least two guide rails (23), which are formed in a slit-like manner at the first planar structural element (6), and configured by roller bodies or sliding bodies which are connected in a guide rail (23)-clamping manner with a second planar structural element (7), which can be pushed under or over the first planar structural element (6).

8. The soft-top according to one of Claims 1 to 7,
**characterised in that**
the first and the second planar structural element (6, 7) each have a side beam (9, 10) which is able to be connected to at least one vehicle side element (11, 12, 4A, 4B).

9. The soft-top according to one of Claims 1 to 8,
**characterised in that**
the planar structural elements (6, 7) are able to spread over the roof opening (2) due to the first planar structural element (6) being attached by its side beam (9) to the vehicle side element (11, 4A) assigned thereto and due to the at least second planar structural element (7) being guided by its side beam (10) in the vehicle transverse direction over the roof opening (2) to a joint with vehicle side elements (12, 4B) assigned thereto.

10. The soft-top according to Claim 8 or 9,
**characterised in that**
the side beam (9) of the first planar structural element (6) is able to be attached to the assigned vehicle side elements (11, 4A) using a projection-groove-plug in connection.

11. The soft-top according to Claims 8 to 10,
**characterised in that**
the side beam (10) of the second planar structural element (7) is rotatably supported around a pivot axis (13) in order to tension the roof skin (8) and is able to be connected to the assigned vehicle side elements (12, 4B) by means of a detent connection.

12. The soft-top according to Claim 11,
**characterised in that**
the pivot axis (13) is configured by the roller bodies or sliding bodies (20) of the guiding devices (14, 15), which roller bodies or sliding bodies (20) are guided in a bearing (22) at the guide rails (19, 23).

13. The soft-top according to one of Claims 8 to 12,
**characterised in that**
a vehicle side element, which is able to be connected at the front with the side beam (9, 10), is configured by the windscreen frame (3) in the area of an A-column (11, 12) and a vehicle side element, which is able to be connected at the rear with the side beam (9, 10), is configured by the rear bow (4, 4A, 4B).

14. The soft-top according to one of Claims 1 to 13,
**characterised in that**
the flexible roof skin (8) is respectively attached to an edge area of the first and second planar structural elements (6, 7), said edge area, in the fitted state, bordering on vehicle side elements (11, 12, 4A, 4B).

15. The soft-top according to one of Claim 1 to 4,
**characterised in that**
the flexible roof skin (8), in the area where support is provided at the planar structural elements (6, 7) and/or at the windscreen frame (3) and/or at the rear bow (4), has a tensioning cable (24), which, in the mounted state, co-operates in a sealing manner with a sealing device arranged at the planar structural elements (6, 7), at the windscreen frame (3) and/or at the rear bow (4).

## Revendications

1. Capote pour un véhicule automobile (1), présentant au moins un premier et un deuxième élément de structure plans (6, 7) recouverts d'une couverture de toit flexible (8), lesquels éléments de structure (6, 7) sont conçus pour être mis en place et retirés par une ouverture de toit (2) dans le sens transversal du véhicule et sont fixés, en place, à l'avant sur un cadre de pare-brise (3) et à l'arrière sur une armature (4) qui couvre la largeur du véhicule, **caractérisée en ce que** les éléments de structure plans (6, 7) sont reliés l'un à l'autre par l'intermédiaire de dispositifs de guidage (14, 15) et peuvent être déplacés l'un par rapport à l'autre, dans le sens transversal du véhicule, au moyen de ces dispositifs de guidage (14, 15).

2. Capote selon la revendication 1, **caractérisée en ce que** les éléments de structure plans (6, 7) sont conçus de façon à pouvoir être déplacés l'un dans l'autre.

3. Capote selon la revendication 2, **caractérisée en ce que** le premier élément de structure plan (6) est constitué d'au moins un renfoncement (16) qui se prolonge dans le sens transversal du véhicule, dans lequel une saille formée de façon complémentaire (17) d'un deuxième élément de structure plan (7), lequel est relié au premier élément de structure plan (6), peut être insérée.

4. Capote selon l'une des revendications 1 à 3, **caractérisée en ce que** les dispositifs de guidage (14) sont formés par des rails de guidage (19) et des pièces de roulement ou pièces coulissantes mobiles (20) qui peuvent être déplacées dans le sens transversal du véhicule, au niveau de bords latéraux de cette saille au moins (17) et de ce renfoncement (16) au moins.

5. Capote selon la revendication 4, **caractérisée en ce que** les rails de guidage (19) sont disposés au niveau du premier élément de structure plan (6) et que la pièce de roulement ou pièce coulissante (20) est disposée au niveau du deuxième élément de structure plan (7).

6. Capote selon la revendication 1, **caractérisée en ce que** les éléments de structure plans (6, 7) sont construits de façon à pouvoir être déplacés l'un par-dessus l'autre.

7. Capote selon la revendication 6, **caractérisée en ce que** les dispositifs de guidage (15) sont formés par au moins deux rails de guidage (23), lesquels sont conçus comme des fentes au niveau du premier élément de structure plan (6), et des pièces de roulement ou pièces coulissantes, lesquelles sont reliées à un deuxième élément de structure plan (7), lequel peut être déplacé au-dessous ou au-dessus du premier élément de structure plan (6) d'une manière qui agrippe les rails de guidage en fente (23).

8. Capote selon l'une des revendications 1 à 7, **caractérisée en ce que** le premier et le deuxième élément de structure plans (6, 7) comprennent chacun une barre latérale (9, 10) qui peut être reliée avec au moins un élément latéral du véhicule (11, 12, 4A, 4B).

9. Capote selon l'une des revendications 1 à 8, **caractérisée en ce que** les éléments de structure plans (6, 7) peuvent s'étendre sur l'ouverture de toit (2) en attachant le premier élément de structure plan (6) par sa barre latérale (9) aux éléments latéraux du véhicule (11, 4A) qui lui sont associés et en guidant au moins le deuxième élément de structure plan (7) par sa barre latérale (10) dans le sens transversal du véhicule par-dessus l'ouverture du toit (2) jusqu'à une jonction avec les éléments latéraux du véhicule qui lui sont associés (12, 4B).

10. Capote selon la revendication 8 ou 9, **caractérisée en ce que** la barre latérale (9) du premier élément de structure plan (6) peut être attachée au niveau des éléments latéraux du véhicule qui lui sont associés (11, 4A) au moyen d'un assemblage de raccordement à saillie et rainure.

11. Capote selon l'une des revendications 8 à 10, **caractérisée en ce que** la barre latérale (10) du deuxième élément de structure plan (7) est montée de façon à pouvoir tourner autour d'un axe de pivotement (13) afin de tendre la couverture de toit (8) et est à même d'être reliée aux éléments latéraux du véhicules qui lui sont associés (12, 4B) au moyen d'une liaison par encliquetage.

12. Capote selon la revendication 11, **caractérisée en ce que** l'axe de pivotement (13) est formé par les pièces de roulement ou pièces coulissantes (20) guidées des dispositifs de guidage (14, 15) au niveau des rails de guidage (19, 23) dans une butée (22).

13. Capote selon l'une des revendications 8 à 12, **caractérisée en ce qu'**un élément latéral du véhicule pouvant être relié à l'avant avec la barre latérale (9, 10) est formé par le cadre de pare-brise (3) dans la zone d'un montant A (11, 12) et un élément latéral du véhicule pouvant être relié à l'arrière avec la barre latérale (9, 10) à l'arrière est formé par l'arceau arrière (4, 4A, 4B).

14. Capote selon l'une des revendications 1 à 13, **caractérisée en ce que** la couverture de toit flexible (8) est respectivement reliée à une zone de bord du premier et du deuxième élément de structure plans (6, 7), laquelle limite les éléments latéraux du véhicule (11, 12, 4A, 4B) à l'état de construction

15. Capote selon l'une des revendications 1 à 14, **caractérisée en ce que** la couverture de toit flexible (8) présente, au niveau des éléments de structure plans (6, 7) et/ou au niveau du cadre de pare-brise (3) et/ou au niveau de l'arceau arrière (4) dans la zone du revêtement, un câble tendeur (24), lequel coopère étroitement avec un dispositif d'étanchéité disposé au niveau des éléments de structure plans (6, 7), au niveau du cadre de pare-brise (3) et/ou au niveau de l'arceau arrière (4) à l'état monté.
